# EUROPÄISCHE PATENTSCHRIFT

(11) **EP 2 896 804 B1**
(45) Veröffentlichungstag und Bekanntmachung des Hinweises auf die Patenterteilung: **03.05.2017**
(21) Anmeldenummer: 15150053.5
(22) Anmeldetag: 02.01.2015
(51) Int. Cl.: F01N 13/18, F01N 13/08, F16L 13/02, F16L 25/10, F16L 25/14

(54) **AUS KOMPONENTEN UNTERSCHIEDLICHER MATERIALIEN GEBILDETE BAUGRUPPE EINER ABGASANLAGE MIT VERBESSERTER HALTBARKEIT**
ASSEMBLY UNIT OF AN EXHAUST SYSTEM COMPOSED OF COMPONENTS MADE OF DIFFERENT MATERIALS WITH IMPROVED DURABILITY
MODULE CONSTITUÉ DE COMPOSANTS EN DIFFÉRENTS MATÉRIAUX, D'UNE INSTALLATION DE GAZ D'ÉCHAPPEMENT AVEC UNE DURABILITÉ AMÉLIORÉE

(30) Priorität: 16.01.2014 DE 102014100472
(43) Veröffentlichungstag der Anmeldung: 22.07.2015
(73) Patentinhaber: Eberspächer Exhaust Technology GmbH & Co. KG, 66539 Neunkirchen (DE)
(72) Erfinder: Leisten, Philippe, 72124 Pliezhausen (DE)
(74) Vertreter: Diehl & Partner GbR

(56) Entgegenhaltungen:
- EP-A2- 2 187 013
- DE-A1- 19 954 317
- JP-U- S5 536 953
- US-A- 5 408 828
- US-A- 5 966 933

## Beschreibung

Die vorliegende Erfindung betrifft eine aus Komponenten unterschiedlicher Materialien gebildete Baugruppe für eine Abgasanlage, welche eine verbesserte Haltbarkeit aufweist.

In Abgasanlagen werden Komponenten aus Gussmaterial und insbesondere Gusseisen sowie aus Blechmaterial verwendet. Komponenten aus Gussmaterial finden insbesondere dann Verwendung, wenn stufenlose Übergänge oder komplexere Strömungspfade gebildet werden sollen, wohingegen Komponenten aus Blechmaterial verwendet werden, wenn konstante Querschnitte für eine gewisse Länge beibehalten werden sollen. Ein Beispiel für eine Komponente aus einem Gussmaterial ist der Abgaskrümmer, ein Beispiel für eine Komponente aus einem Blechmaterial ist die Abgasleitung. Die Verbindung zwischen einer Komponente aus einem Gussmaterial und einer Komponente aus einem Blechmaterial wird häufig durch Löten oder Schweißen hergestellt. Eine mit einer Komponente aus Blechmaterial dauerhaft verbundene Komponente aus einem Gussmaterial wird in dem vorliegenden Dokument als Baugruppe bezeichnet.

Aus der EP 2 187 013 A2 ist eine Abgas-Nachbehandlungs-Anordnung mit den Merkmalen des Oberbegriffs des unabhängigen Anspruchs 1 bekannt.

Das japanische Gebrauchsmuster JP S55-36953 U offenbart eine Baugruppe einer Abgasanlage mit einem optisch ähnlichen Aufbau, wie in Anspruch 1 beansprucht. Allerdings ist der Anschlusstrichter, welcher einen Rohransatz und wenigstens eine Halterung aufweist, mehrstückig aus einzelnen miteinander verschraubten oder verschweißten Teilen ausgebildet, wobei die einzelnen Teile aus unterschiedlichen Materialien, nämlich Gussmaterial und Blechmaterial (Stahl) gebildet sind.

Aufgrund der unterschiedlichen thermischen Dehnungseigenschaften der Materialien aus Gussmaterial und aus Blechmaterial, welche auch auf unterschiedliche Wandstärken zurückzuführen sind, kommt es im Verbindungsbereich zwischen Komponenten aus Gussmaterial und Komponenten aus Blechmaterial häufig zu Problemen, welche zu einer Undichtheit der Baugruppe insgesamt führen können.

Ausgehend hiervon ist es Aufgabe der vorliegenden Erfindung, eine aus Komponenten unterschiedlicher Materialien gebildete Baugruppe einer Abgasanlage bereitzustellen, welche eine verbesserte Haltbarkeit aufweist.

Die vorstehende Aufgabe wird durch die Kombination der Merkmale des unabhängigen Anspruchs 1 gelöst. Bevorzugte Weiterbildungen finden sich in den Unteransprüchen. Ausführungsformen einer Baugruppe einer Abgasanlage weisen wenigstens einen Anschlusstrichter aus Gussmaterial und wenigstens ein Rohr auf, wobei sowohl der wenigstens eine Anschlusstrichter als auch das wenigstens eine Rohr ausgebildet ist, von heißem Abgas durchströmt zu werden. Der wenigstens eine Anschlusstrichter weist einen Rohransatz und wenigstens eine Halterung auf. Die Halterung ist außerhalb des Rohransatzes angeordnet. Ein Verbindungsabschnitt des Rohres ist an der Halterung des wenigstens einen Anschlusstrichters befestigt. Dabei erstreckt sich der Rohransatz über den Verbindungsabschnitt des Rohres hinaus in das Innere des Rohres hinein und ist dabei von einer Innenwand des Rohres um wenigstens die einfache Wandstärke des Rohres beabstandet.

Der Rohransatz des wenigstens einen Anschlusstrichters weist einen ersten Abschnitt auf, an welchem der Rohransatz einen konstanten Abstand von der Innenwand des Rohres aufweist. Weiter weist der Rohransatz des wenigstens einen Anschlusstrichters einen zweiten Abschnitt auf, in welchem der Rohransatz einen gegenüber dem Abstand im ersten Abschnitt stetig zunehmenden Abstand von der Innenwand des Rohres aufweist. Dabei grenzt der zweite Abschnitt an den ersten Abschnitt an und ist der zweite Abschnitt zwischen dem ersten Abschnitt und einem Hauptkörper des Anschlusstrichters angeordnet, über welchen Hauptkörper der Rohransatz mit der Halterung verbunden ist. Dies führt dazu, dass der Abstand zwischen Rohransatz und Halterung zum Ende des Rohres hin zunimmt und am Ende des Rohres maximal ist. Somit kann sichergestellt werden, dass die Wärmeleitung zwischen dem Rohransatz und der Halterung gering ist. Indem der Rohransatz über den Verbindungsabschnitt hinaus in das Innere des Rohres hineinragt, und gegenüber einer Innenwand des Rohres beabstandet ist, wirkt er hinsichtlich des Verbindungsabschnittes wie eine thermische Isolierung, da in dem Rohr geführtes heißes Abgas durch den Rohransatz mit Abstand zum Verbindungsabschnitt geführt wird. In Versuchen konnte so die Temperatur des Verbindungsabschnittes um absolut 100°C bzw. relativ 13 % gesenkt werden.

In diesem Dokument wird unter dem Verbindungsabschnitt des Rohres derjenige Rohrabschnitt verstanden, welcher an der Halterung des Anschlusstrichters flächig anliegt oder parallel zu dieser Halterung verläuft. Weiter umfasst der Verbindungsabschnitt denjenigen Abschnitt des Rohres, in welchem sich ein Hilfsstoff wie Lot oder eine Schweißnaht befindet, welcher das Rohr an der Halterung des Anschlusstrichters befestigt.

Gemäß einer Ausführungsform ist an beiden Enden des Rohres jeweils ein entsprechend ausgebildeter Anschlusstrichter befestigt, so dass die Baugruppe insgesamt zwei Anschlusstrichter aufweist.

Gemäß einer Ausführungsform weist der wenigstens eine Anschlusstrichter drei oder mehr Halterungen auf, die gleichmäßig um das Rohr herum verteilt angeordnet sind. Bei der Verwendung von mehreren Halterungen kann eine Gasdichtheit der Verbindung zwischen Anschlusstrichter und Rohr über einer Hauptkörper des Anschlusstrichters sichergestellt werden.

Gemäß einer Ausführungsform weist der wenigstens eine Anschlusstrichter genau eine Halterung auf, die einer ringförmigen oder ovalen Querschnitt aufweist. Derartige Halterungen sind gut geeignet, Rohre mit kreisförmigem oder ovalem Querschnitt zu haltern.

Gemäß einer Ausführungsform weist der Rohransatz einen ringförmigen oder ovalen Querschnitt auf und ist damit gut geeignet, in ein Rohr mit kreisförmigem oder ovalem Querschnitt angeordnet zu werden.

Gemäß einer Ausführungsform ragt der Rohransatz des wenigstens einen Anschlusstrichters um wenigstens 0,8 cm und insbesondere um wenigstens 1 cm und insbesondere um wenigstens 1,5 cm und insbesondere um wenigstens 2 cm und weiter insbesondere um wenigstens 3 cm über den Verbindungsabschnitt des Rohres hinaus in das Innere des Rohres hinein. Gemäß einer Ausführungsform wird die Länge des Anschlusstrichters und des Verbindungsabschnitts entlang einer Geraden gemessen, die parallel zu einer axialen Richtung des Rohres oder Symmetrieachse des Rohres im Bereich des Anschlusstrichters verläuft. Es wurde herausgefunden, dass derartig dimensionierte Anschlusstrichter besonders gut geeignet sind, als thermische Isolierung für Verbindungen zwischen Rohren und Anschlusstrichtern aus Gussmaterial zu dienen.

Gemäß einer Ausführungsform ragt der Rohransatz des wenigstens einen Anschlusstrichters um weniger als 10 cm und insbesondere um höchstens 3 cm über den Verbindungsabschnitt des Rohres hinaus in das Innere des Rohres hinein. Es wurde herausgefunden, dass bei größeren Längen des Rohransatzes keine weitere wesentliche Verbesserung der thermischen Isolierung der Verbindung zwischen Rohr und Anschlusstrichter erzielt wird. Gemäß einer Ausführungsform ragt der Rohransatz des wenigstens einen Anschlusstrichters um zwischen 1 cm und 2 cm über den Verbindungsabschnitt des Rohres hinaus in das Innere des Rohres hinein.

Gemäß einer Ausführungsform ist der Rohransatz des wenigstens einen Anschlusstrichters von der Innenwand des Rohres um wenigstens 0,8 mm und insbesondere um wenigstens 1 mm und insbesondere um wenigstens 1,5 mm und insbesondere um wenigstens 3 mm und insbesondere um wenigstens 5 mm und weiter insbesondere um wenigstens 7 mm beabstandet. Bei diesen Abständen kann verhindert werden, dass die von dem Rohransatz auf den Verbindungsabschnitt übertragene Strahlungswärme zu groß ist.

Gemäß einer Ausführungsform ist der Rohransatz des wenigstens einen Anschlusstrichters von der Innenwand des Rohres um weniger als 3 cm und insbesondere um höchstens 7 mm beabstandet. Es ist herausgefunden worden, dass sich bei größeren Abständen die thermische Isolierung nicht weiter wesentlich verbessert. Weiter kann es bei noch größeren Abständen zwischen dem Rohransatz und der Innenwand des Rohres zu stärkeren Verwirbelungen des dort eintretenden Abgases und damit zu einem erhöhten Wärmeeintrag auf den Verbindungsabschnitt kommen. Gemäß einer Ausführungsform ist der Rohransatz des wenigstens einen Anschlusstrichters von der Innenwand des Rohres um zwischen 1 mm und 5 mm beabstandet.

Gemäß einer Ausführungsform weist der Rohransatz des wenigstens einen Anschlusstrichters eine Wandstärke auf, die wenigstens dem doppelten (2-fachen) und insbesondere wenigstens dem 5-fachen und weiter insbesondere wenigstens dem 10-fachen der Wandstärke des Rohres entspricht. In der Folge unterscheiden sich die Wandstärken des Rohres und des Rohransatzes stark voneinander.

Gemäß einer Ausführungsform weisen der Rohransatz und die wenigstens eine Halterung des wenigstens einen Anschlusstrichters zusammen einen U-förmigen Querschnitt auf, wobei das "U" über einen kurzen Schenkel und über einen langen Schenkel verfügt. Der kurze Schenkel des "U" bildet die Halterung und der lange Schenkel des "U" bildet den Rohransatz. Beide Schenkel sind hin zum Rohr orientiert und der Boden der U-Form steht mit dem Inneren des Rohres in Fluidverbindung.

Gemäß einer Ausführungsform erfolgt die Verbindung zwischen dem Verbindungsabschnitt des Rohres und der Halterung des Anschlusstrichters über eine Schweißnaht oder eine Lötnaht. Derartige Verbindungen sind kostengünstig und gasdicht herstellbar.

Gemäß einer Ausführungsform ist die wenigstens eine Halterung des wenigstens einen Anschlusstrichters innerhalb oder außerhalb des Rohrs angeordnet und überlappt in Längsrichtung des Rohres um wenigstens 1 mm und insbesondere um wenigstens 2 mm und weiter insbesondere um wenigstens 3 mm mit dem Rohr. Dieser Überlapp erleichtert die Anordnung der Halterung am Rohr und das Bereitstellen einer gasdichten Verbindung zwischen Anschlusstrichter und Rohr.

Gemäß einer Ausführungsform ist das Rohr von der wenigstens einen Halterung des wenigstens einen Anschlusstrichters um weniger als 1,5 mm und insbesondere um weniger als 1,0 mm und weiter insbesondere um weniger als 0,5 mm beabstandet. Somit besteht zwischen dem Rohr und der Halterung nur ein geringes Spiel, welches das Einsetzen des Rohrs an der Halterung erleichtert. Ist dieses Spiel zu groß, wird es schwierig, das Rohr gasdicht an der Halterung zu befestigen. Zudem reduziert eine gute Anpassung des Rohres an die Halterung eine Belastung einer Schweißnaht bzw. Lötnaht.

Gemäß einer Ausführungsform sind der Rohransatz und die Halterung des wenigstens einen Anschlusstrichters über ihren ganzen Umfang und insbesondere gasdicht miteinander verbunden.

Gemäß einer Ausführungsform ist das Rohr aus einem Blechmaterial und insbesondere aus einem Stahlblech und weiter insbesondere aus einem niedrig legierten Stahlblech gebildet. Derartige Rohre weisen ein geringes Gewicht auf, sind kostengünstig herzustellen und daher in Abgasanlagen verbreitet.

Gemäß einer Ausführungsform weist der Rohransatz des wenigstens einen Anschlusstrichters eine Länge auf, welche wenigstens dem 1,25-fachen und insbesondere wenigstens dem 1,5-fachen und insbesondere wenigstens dem 2-fachen und weiter insbesondere wenigstens dem 3-fachen der Länge der wenigstens einen Halterung entspricht. Dabei wird diese Länge parallel zu einer axialen Richtung des Rohres oder Symmetrieachse des Rohres im Bereich des Anschlusstrichters gemessen.

Ausführungsformen einer Abgasanlage für ein verbrennungsmotorisch betriebenes Fahrzeug weisen einen Abgaskrümmer, ein Endrohr und eine Baugruppe wie vorstehend beschrieben auf. Dabei ist der Abgaskrümmer zum Anschluss an einen Verbrennungsmotor ausgebildet und steht das Endrohr über eine Abgasleitung mit dem Abgaskrümmer in Fluidverbindung. Weiter sind der wenigstens eine Anschlusstrichter und das Rohr der Baugruppe entlang des Abgasstranges zwischen dem Abgaskrümmer und dem Endrohr angeordnet und stehen somit sowohl mit dem Abgaskrümmer als auch dem Endrohr in Fluidverbindung.

Auch wenn sich die vorstehend beschriebene Baugruppe besonders gut für die Verwendung in Personenkraftwagen eignet, ist die vorliegende Erfindung hierauf nicht beschränkt. So kann die Erfindung beispielsweise auch in Verbindung mit Lastkraftwagen verwendet werden, wobei sich die vorstehend angegebenen Durchmesser um das 2,5-fache bis 3-fache erhöhen.

In diesem Zusammenhang wird darauf hingewiesen, dass die in dieser Beschreibung und den Ansprüchen zur Aufzählung von Merkmalen verwendeten Begriffe "umfassen", "aufweisen", "beinhalten", "enthalten" und "mit", sowie deren grammatikalische Abwandlungen, generell als nichtabschließende Aufzählung von Merkmalen, wie z. B. Verfahrensschritten, Einrichtungen, Bereichen, Größen und dergleichen aufzufassen sind, und in keiner Weise das Vorhandensein anderer oder zusätzlicher Merkmale oder Gruppierungen von anderen oder zusätzlichen Merkmalen ausschließen.

Weitere Merkmale der Erfindung ergeben sich aus der nachfolgenden Beschreibung von Ausführungsbeispielen in Verbindung mit den Ansprüchen sowie den Figuren. In den Figuren werden gleiche bzw. ähnliche Elemente mit gleichen bzw. ähnlichen Bezugszeichen bezeichnet. Es wird darauf hingewiesen, dass die Erfindung nicht auf die Ausführungsformen der beschriebenen Ausführungsbeispiele beschränkt, sondern durch den Umfang der beiliegenden Patentansprüche bestimmt ist. Insbesondere können die einzelnen Merkmale bei erfindungsgemäßen Ausführungsformen in anderer Anzahl und Kombination als bei den untenstehend angeführten Beispielen verwirklicht sein. Weiter wird darauf hingewiesen, dass die Zeichnungen nicht maßstabsgetreu sind. Bei der nachfolgenden Erläuterung eines Ausführungsbeispiels der Erfindung wird auf die beiliegenden Figuren Bezug genommen, von denen
- Figur 1: zeigt schematisch einen Längsschnitt durch eine von wenigstens einem Anschlusstrichter und einem Rohr gebildete Baugruppe ;
- Figur 2: zeigt schematisch einen Längsschnitt durch eine von wenigstens einem Anschlusstrichter und einem Rohr gebildete Baugruppe ;
- Figur 3: zeigt schematisch einen Längsschnitt durch eine von wenigstens einem Anschlusstrichter und einem Rohr gebildete Baugruppe gemäß einer erfindungsgemäßen Ausführungsform;
- Figur 4: zeigt schematisch sowohl einen Längsschnitt als auch einen Querschnitt durch eine von zwei Anschlusstrichtern und einem zwischen den Anschlusstrichtern angeordneten Rohr gebildete Baugruppe ; und
- Figur 5: zeigt schematisch eine Abgasanlage, welche eine der Baugruppen der Figuren 1 bis 4 verwendet.

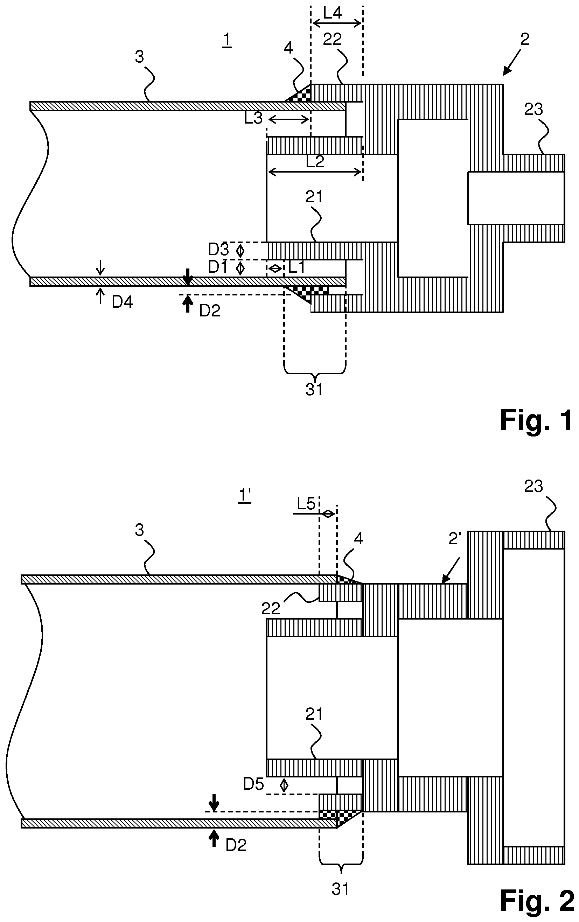

Bei der in Figur 1 schematisch im Längsschnitt gezeigten Form wird die Baugruppe 1 von einem nicht vollständig gezeigten Rohr 3 aus einem niedrig legierten Stahl und wenigstens einem daran befestigten Anschlusstrichter 2 aus Gusseisen gebildet. An dem nicht gezeigten Ende des Rohres 3 kann ein identischer oder abgewandelter Anschlusstrichter vorgesehen sein.

Das Rohr 3 weist in der gezeigten Ausführungsform einen kreisförmigen Querschnitt mit einem Innendurchmesser von 58 mm und einem Außendurchmesser von 60 mm auf. Damit beträgt eine Wandstärke D4 des Rohres 3 genau 1 mm. Das Rohr 3 ist an seinem dem Anschlusstrichter 2 zugewandten Ende senkrecht zu seiner Erstreckungsrichtung abgeschnitten. Es wird betont, dass die vorliegende Erfindung nicht auf derartige Rohre beschränkt ist. So kann beispielsweise alternativ ein Rohr mit einem Außendurchmesser von 110 mm und einer Wandstärke von zwischen 0,8 mm und 1,5 mm verwendet werden. In diesem Fall sind die Abmessungen des Anschlusstrichters entsprechend anzupassen.

Der Anschlusstrichter 2 weist einen Rohransatz 21 mit ringförmigem Querschnitt auf, welcher konzentrisch innerhalb einer Halterung 22 mit ebenfalls ringförmigem Querschnitt angeordnet ist. Somit ist die Halterung 22 radial außerhalb des Rohransatzes 21 angeordnet und von dem Rohransatz 21 beabstandet. In der gezeigten Ausführungsform beträgt ein Abstand zwischen einer Innenwand der Halterung 22 und einer Außenwand des Rohransatzes 21 genau 20 mm. Es wird betont, dass die vorliegende Erfindung nicht auf derartige Abstände beschränkt ist. So kann beispielsweise alternativ der Abstand zwischen einer Innenwand der Halterung 22 und einer Außenwand des Rohransatzes 21 zwischen 1,8 mm und 6,5 mm betragen.

Weiter weist der Rohransatz 21 eine Länge L2 vom 40 mm auf, welche dem Doppelten einer Länge L4 der Halterung 22 von 20 mm entspricht. In der Folge ragt der Rohransatz 21 um eine Länge L3 von 20 mm über die Halterung 22 hinaus in das Innere des Rohres 3 hinein. Es wird betont, dass die vorliegende Erfindung nicht auf eine derartige Länge beschränkt ist. So kann die Länge L2 des Rohransatzes 21 beispielsweise alternativ zwischen 25 mm und 40 mm betragen. Weiter kann der Rohransatz 21 alternativ beispielweise um eine Länge L3 von zwischen 10 mm und 20 mm über die Halterung 22 hinaus in das Innere des Rohres 3 hineinragen.

Der Rohransatz 21 weist eine Wandstärke D3 von 10 mm und damit der 10-fachen Wandstärke D4 des Rohres 3 auf. Es wird betont, dass die vorliegende Erfindung nicht auf eine derartige Wandstärke D3 des Rohransatzes 21 beschränkt ist. So kann die Wandstärke D3 des Rohransatzes 21 beispielsweise alternativ zwischen 1,5 mm und 2,5 mm und insbesondere 2 mm betragen.

Das Rohr 3 überlappt um 15 mm mit der Halterung 22, welche eine Außenwand des Rohres 3 umschließt. Dabei besteht zwischen einer Außenwand des Rohres 3 und einer Innenwand der Halterung 22 ein Spiel D2 von 1 mm. Im Bereich der Überlappung ist das Rohr 3 mittels einer Schweißnaht 4 über seinen ganzen Umfang gasdicht an der Halterung 22 des Anschlusstrichters 2 befestigt.

Die Schweißnaht 4 und der Überlapp des Rohres 3 mit der Halterung 22 legen gemeinsam einen Verbindungsabschnitt 31 fest. Ersichtlich weist der Rohransatz 21 eine Länge L2 auf, welche um eine Länge L1 von 10 mm über den Verbindungsabschnitt 31 des Rohres 3 hinaus ins Innere des Rohres 3 hineinragt. Dabei weist eine Außenseite des Rohransatzes 21 einen minimalen Abstand D1 von 18 mm von einer Innenwand des Rohres 3 auf, wenn das maximale Spiel D2 zwischen der Außenwand des Rohres 3 und der Innenwand der Halterung 22 einseitig angeordnet ist. Es wird betont, dass die vorliegende Erfindung nicht auf einen derartigen minimalen Abstand D1 zwischen der Außenseite des Rohransatzes 21 und der Innenwand des Rohres 3 beschränkt ist. So kann beispielsweise alternativ der Abstand D1 zwischen der Außenseite des Rohransatzes 21 und der Innenwand des Rohres 3 zwischen 1 mm und 5 mm betragen.

Gemeinsam weisen der Rohransatz 21 und die Halterung 22 des Anschlusstrichters 2 einen U-förmigen Querschnitt auf, wobei der Rohransatz 21 einen im Inneren des Rohres 3 angeordneten langen Schenkel des "U" und die Halterung 22 einen außerhalb des Rohres 3 angeordneten kurzen Schenkel des "U" bilden, und der Boden der U-Form mit einem Inneren des Rohres 3 in Fluidverbindung steht.

Aufgrund der durch die Schweißnaht 4 gebildeten umlaufenden gasdichten Verbindung zwischen der Außenwand des Rohres 3 und der Halterung 22 kann in dem Rohr 3 geführtes Abgas zwar in den zwischen der Außenseite des Rohransatzes 21 und der Innenseite der Halterung 22 und zwischen der Außenseite des Rohransatzes 21 und der Innenwand des Rohres 3 gebildeten Raum eindringen, dort aber nicht weiterströmen, so dass sich ein relativ statisches Abgaspolster bildet. Dieses Abgaspolster trägt zur Isolation des Rohransatzes 21 gegenüber dem Rohr 3 im Verbindungsabschnitt 31 bei und hilft damit, eine thermische Belastung der Schweißnaht 4 zu reduzieren.

An seinem dem Rohransatz 21 gegenüberliegenden Ende weist der Anschlusstrichter 2 einen Anschlussstutzen 23 mit gegenüber dem Rohransatz 21 verkleinertem Innendurchmesser auf.

Im Folgenden wird unter Bezugnahme auf die Figur 2 eine zweite Form einer Baugruppe 1' beschrieben. Da diese zweite Form der vorstehend beschriebenen ersten Form sehr ähnlich ist, wird im Folgenden nur auf Unterschiede eingegangen und ansonsten auf die erste Ausführungsform verwiesen.

Die in Figur 2 schematisch im Längsschnitt gezeigte Form unterscheidet sich von der vorstehend beschriebenen ersten Form insbesondere dadurch, dass das Rohr 3 die Halterung 22 des Anschlusstrichters 2' umgreift, so dass die Halterung 22 zusätzlich zum Rohransatz 21 des Anschlusstrichters 2' im Inneren des Rohres 3 angeordnet ist. Dabei überlappt das Rohr 3 die Halterung 22 in Längsrichtung des Rohres 3 um eine Länge L5 von 5 mm.

Eine Außenseite des Rohransatzes 21 ist von einer Innenseite der Halterung 22 um einen Abstand D5 von 10 mm beabstandet. Das maximale Spiel D2 zwischen der Innenwand des Rohres 3 und der Außenseite der Halterung 22 beträgt auch in der zweiten Ausführungsform 1 mm und wird gasdicht von der Schweißnaht 4 verschlossen.

Auch in der zweiten Ausführungsform weist der Anschlusstrichter 2' an seinem dem Rohransatz 21 gegenüberliegenden Ende einen Anschlussstutzen 23 auf, der in der zweiten Ausführungsform jedoch einen gegenüber dem Rohransatz 21 vergrößerten Innendurchmesser aufweist.

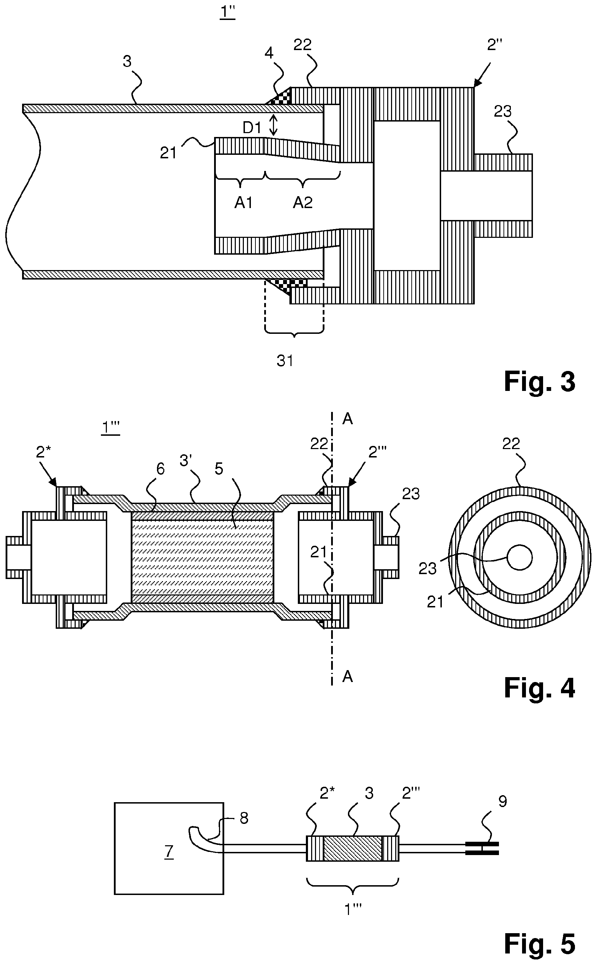

Im Folgenden wird unter Bezugnahme auf die Figur 3 eine Ausführungsform einer erfindungsgemäßen Baugruppe beschrieben. Da die in Figur 3 schematisch im Längsschnitt gezeigte Ausführungsform der Baugruppe 1" der in Figur 1 gezeigten ersten Form der Baugruppe 1 sehr ähnlich ist, wird im Folgenden nur auf Unterschiede eingegangen und ansonsten auf die Ausführungen zur ersten Form verwiesen.

Die in Figur 3 gezeigte Baugruppe 1" unterscheidet sich von der in Figur 1 gezeigten Baugruppe 1 lediglich dadurch, dass der Anschlusstrichter 2" einen Rohransatz 21 aufweist, der sich aus einem ersten Abschnitt A1 und einem zweiten Abschnitt A2 zusammensetzt. Im ersten Abschnitt A1 weist eine Außenseite des Rohransatzes 21 einen konstanten Abstand D1 von der Innenwand des Rohres 3 auf, und im zweiten Abschnitt A2 weist eine Außenseite des Rohransatzes 21 einen stetig zunehmenden Abstand D1 von der Innenwand des Rohres 3 auf. Dabei grenzt der zweite Abschnitt A2 unmittelbar an den ersten Abschnitt A1 des Rohransatzes 21 an und ist zwischen dem ersten Abschnitt A1 des Rohransatzes 21 und einem Hauptkörper des Anschlusstrichters 2" angeordnet. Somit befindet ist der erste Abschnitt A1 des Rohransatzes 21 weiter in das Innere des Rohres 3 eingeführt, als der zweite Abschnitt A2. In der Folge weist der Rohransatz 21 eine Trichterform mit in Längsrichtung des Rohres 3 und des Rohransatzes 21 variablem Innendurchmesser auf. An der Verbindungsstelle des Rohransatzes 21 mit einem Hauptkörper des Anschlusstrichters 2" ist der Abstand zur Halterung 22 bei dieser Ausgestaltung des Rohransatzes 21 vergrößert.

Im Folgenden wird unter Bezugnahme auf die Figur 4 eine weitere Form einer Baugruppe 1"' beschrieben. Dabei ist in Figur 4 links schematisch ein Längsschnitt und in Figur 4 rechts schematisch ein Querschnitt entlang der Schnittachse A-A gezeigt. Wie aus Figur 4 ersichtlich, weist die Baugruppe 1"' zwei an beiden Enden des Rohres 3 spiegelbildlich angeordnete Anschlusstrichter 2"' bzw. 2* mit identischem Aufbau auf. Der Aufbau dieser Anschlusstrichter 2"', 2* ist dem in Figur 1 gezeigten Aufbau sehr ähnlich, so dass auf die Ausführungen zu der ersten Form verwiesen wird. Das Rohr 3' weist an seinen beiden den Anschlusstrichtern 2"' und 2* zugewandten Enden jeweils Abschnitte auf, in welchen der Durchmesser des Rohres 3' vergrößert ist. Dies erleichtert es, im Rohransatz 21 der Anschlusstrichter 2"' und 2* einen nahezu identischen Innendurchmesser wie im Rohr 3' auszubilden, so dass der Strömungswiderstand zwischen dem Rohr 3' und dem Anschlusstrichter 2"' bzw. 2* herabgesetzt ist. In seinem Inneren nimmt das Rohr 3' einen Monolithen 5 und eine diesen umgebende Isoliermatte 6 aus Glasfasermaterial auf, so dass die Baugruppe 1"' insgesamt einen Abgaskatalysator bildet.

Wie in Figur 4 rechts im Querschnitt gezeigt, weisen sowohl die Halterung 22 als auch der Rohransatz 21 in der gezeigten Ausführungsform jeweils einen ringförmigen Querschnitt auf. Abschließend wird unter Bezugnahme auf die Figur 5 eine Ausführungsform einer Abgasanlage für ein mit einem Verbrennungsmotor betriebenes Fahrzeug beschrieben.

Die in Figur 5 schematisch gezeigte Abgasanlage weist einen Abgaskrümmer 8 auf, welcher mit einem Verbrennungsmotor 7 verbunden ist. Zwischen dem Abgaskrümmer 8 und einem Endrohr 9 ist über eine Abgasleitung eine Baugruppe 1'" mit dem in Figur 4 gezeigten Aufbau angeordnet. Somit steht das Endrohr 9 über die Baugruppe 1'" mit dem Abgaskrümmer 8 in Fluidverbindung.

Auch wenn sich die vorstehend beschriebene Baugruppe besonders gut für die Verwendung in Personenkraftwagen eignet, ist die vorliegende Erfindung hierauf nicht beschränkt. So kann die Erfindung beispielsweise auch in Verbindung mit Lastkraftwagen verwendet werden, wobei sich die vorstehend angegebenen Durchmesser um das 2,5-fache bis 3-fache erhöhen.

## Patentansprüche

1. Baugruppe (1, 1'; 1"; 1"') einer Abgasanlage, aufweisend:
wenigstens einen Anschlusstrichter (2) oder zwei Anschlusstrichter (2); und ein Rohr (3);
wobei der wenigstens eine Anschlusstrichter (2) einen Rohransatz (21) und wenigstens eine Halterung (22) aufweist und aus Gussmaterial gebildet ist,
wobei die wenigstens eine Halterung (22) außerhalb des Rohransatzes (21) angeordnet ist, und
wobei ein Verbindungsabschnitt (31) des Rohres (3) an der wenigstens einen Halterung (22) des wenigstens einen Anschlusstrichters (2) befestigt ist,
**dadurch gekennzeichnet,**
**dass** sich der Rohransatz (21) des wenigstens einen Anschlusstrichters (2) in das Innere des Rohres (3) hinein erstreckt,
**dass** sich der Rohransatz (21) des wenigstens einen Anschlusstrichters (2) innerhalb des Rohres (3) über den Verbindungsabschnitt (31) des Rohres (3) hinaus in das Innere des Rohres (3) hinein erstreckt;
**dass** der Rohransatz (21) im Inneren des Rohres (3) von einer Innenwand des Rohres (3) um wenigstens die einfache Wandstärke des Rohres (3) beabstandet ist; und
**dass** der Rohransatz (21) des wenigstens einen Anschlusstrichters (2") einen ersten Abschnitt (A1) aufweist, in welchem der Rohransatz (21) einen konstanten Abstand (D1) von der Innenwand des Rohres (3) aufweist, und einen an den ersten Abschnitt (A1) angrenzenden zweiten Abschnitt (A2) aufweist, in welchem der Rohransatz (21) einen gegenüber dem Abstand im ersten Abschnitt stetig zunehmenden Abstand (D1) von der Innenwand des Rohres (3) aufweist, wobei der zweite Abschnitt (A2) zwischen dem ersten Abschnitt (A1) und einem Hauptkörper des Anschlusstrichters (2") angeordnet ist.

2. Baugruppe (1, 1'; 1"; 1"') nach Anspruch 1, wobei der Rohransatz (21) des wenigstens einen Anschlusstrichters (2) um wenigstens 0,8 cm oder um wenigstens 1 cm oder um wenigstens 1,5 cm oder um wenigstens 2 cm oder um wenigstens 3 cm über den Verbindungsabschnitt (31) des Rohres (3) hinaus in das Innere des Rohres (3) hineinragt.

3. Baugruppe (1, 1'; 1"; 1"') nach Anspruch 2, wobei der Rohransatz (21) des wenigstens einen Anschlusstrichters (2) um weniger als 10 cm über den Verbindungsabschnitt (31) des Rohres (3) hinaus in das Innere des Rohres (3) hineinragt oder um höchstens 3 cm über den Verbindungsabschnitt (31) des Rohres (3) hinaus in das Innere des Rohres (3) hineinragt.

4. Baugruppe (1, 1'; 1"; 1"') nach Anspruch 1, 2 oder 3, wobei der Rohransatz (21) des wenigstens einen Anschlusstrichters (2) von der Innenwand des Rohres (3) um wenigstens 0,8 mm oder um wenigstens 1 mm oder um wenigstens 1,5 mm oder um wenigstens 3 mm oder um wenigstens 5 mm oder um wenigstens 7 mm beabstandet ist.

5. Baugruppe (1, 1'; 1"; 1"') nach Anspruch 4, wobei der Rohransatz (21) des wenigstens einen Anschlusstrichters (2) von der Innenwand des Rohres (3) um weniger als 3 cm von der Innenwand des Rohres (3) oder um höchstens 7 mm von der Innenwand des Rohres (3) beabstandet ist.

6. Baugruppe (1, 1'; 1"; 1"') nach einem der Ansprüche 1 bis 5, wobei der Rohransatz (21) des wenigstens einen Anschlusstrichters (2) eine Wandstärke (D3) aufweist, die wenigstens dem doppelten oder wenigstens dem 5-fachen oder wenigstens dem 10-fachen der Wandstärke (D4) des Rohres (3) entspricht.

7. Baugruppe (1, 1'; 1"; 1"') nach einem der Ansprüche 1 bis 6, wobei der Rohransatz (21) und die wenigstens eine Halterung (22) des wenigstens einen Anschlusstrichters (2) zusammen einen U-förmigen Querschnitt aufweisen, mit einem die wenigstens eine Halterung (22) bildenden kurzen Schenkel und einem den Rohransatz (21) bildenden langen Schenkel, wobei beide Schenkel hin zum Rohr (3) orientiert sind und der Boden der U-Form mit einem Inneren des Rohres (3) in Fluidverbindung steht.

8. Baugruppe (1, 1'; 1"; 1"') nach einem der Ansprüche 1 bis 7, wobei die Verbindung (4) zwischen dem Verbindungsabschnitt (31) des Rohres (3) und der wenigstens einen Halterung (22) des Anschlusstrichters (2) über eine Schweißnaht oder eine Lötnaht erfolgt.

9. Baugruppe (1, 1'; 1"; 1"') nach einem der Ansprüche 1 bis 8, wobei die wenigstens eine Halterung (22) des wenigstens einen Anschlusstrichters (2) innerhalb oder außerhalb des Rohres (3) angeordnet ist, und in Längsrichtung des Rohres (3) um wenigstens 1 mm oder um wenigstens 2 mm oder um wenigstens 3 mm mit dem Rohr (3) überlappt.

10. Baugruppe (1, 1'; 1"; 1"') nach einem der Ansprüche 1 bis 9, wobei das Rohr (3) von der wenigstens einen Halterung (22) des wenigstens einen Anschlusstrichters (2) um weniger als 1,5 mm oder um weniger als 1,0 mm oder um weniger als 0,5 mm beabstandet ist.

11. Baugruppe (1, 1'; 1"; 1"') nach einem der Ansprüche 1 bis 10, wobei der Rohransatz des wenigstens einen Anschlusstrichters eine Länge aufweist, welche wenigstens dem 1,25-fachen oder wenigstens dem 1,5-fachen oder wenigstens dem 2-fachen oder wenigstens dem 3-fachen der Länge der wenigstens einen Halterung entspricht.

12. Baugruppe (1, 1'; 1"; 1"') nach einem der Ansprüche 1 bis 11, wobei der Rohransatz (21) und die wenigstens eine Halterung (22) des wenigstens einen Anschlusstrichters (2) über ihren ganzen Umfang miteinander gasdicht verbunden sind.

13. Baugruppe (1, 1'; 1"; 1"') nach einem der Ansprüche 1 bis 12, wobei der wenigstens eine Anschlusstrichter (2) genau eine Halterung (22) mit kreisförmigem oder ovalem Querschnitt aufweist und/oder wobei der Rohransatz (21) des wenigstens einen Anschlusstrichters (2) einen kreisförmigen oder ovalen Querschnitt aufweist.

14. Baugruppe (1, 1'; 1"; 1"') nach einem der Ansprüche 1 bis 13, wobei die wenigstens eine Halterung (22) mit ringförmigem Querschnitt des wenigstens einen Anschlusstrichters (2) konzentrisch zum Rohransatz (21) mit ringförmigem Querschnitt des wenigstens einen Anschlusstrichters (2) angeordnet ist.

15. Abgasanlage für ein verbrennungsmotorisch betriebenes Fahrzeug, aufweisend:
einen Abgaskrümmer (8), welcher zum Anschluss an einen Verbrennungsmotor (7) ausgebildet ist;
ein Endrohr (9), welches mit dem Abgaskrümmer (8) über eine Abgasleitung in Fluidverbindung steht;
eine Baugruppe (1, 1'; 1"; 1"') nach einem der Ansprüche 1 bis 14, wobei der wenigstens eine Anschlusstrichter (2) und das Rohr (3) der Baugruppe (1, 1'; 1"; 1"') zwischen dem Abgaskrümmer (8) und dem Endrohr (9) angeordnet sind, und sowohl mit dem Abgaskrümmer (8) als auch dem Endrohr (9) in Fluidverbindung stehen.

## Claims

1. An assembly unit (1, 1'; 1"; 1"') of an exhaust system, the assembly unit comprising:
at least one connection funnel (2) or two connection funnels (2); and
a pipe (3);
wherein the at least one connection funnel (2) comprises a pipe socket (21) and at least one bracket (22) and is made of cast material,
wherein the at least one bracket (22) is arranged outside of the pipe socket (21), and
wherein a connection section (31) of the pipe (3) is fastened to the at least one bracket (22) of the at least one connection funnel (2),
**characterized in that**
the pipe socket (21) of the at least one connection funnel (2) extends into the interior of the pipe (3);
the pipe socket (21) of the at least one connection funnel (2) extends within the pipe (3) beyond the connection section (31) of the pipe (3) into an interior of the pipe (3);
the pipe socket (21) in the interior of the pipe (3) is spaced apart from an inner wall of the pipe (3) by at least one wall thickness of the pipe (3); and
the pipe socket (21) of the at least one connection funnel (2") has a first section (A1), in which the pipe socket (21) has a constant distance (D1) from the inner wall of the pipe (3), and has a second section (A2) adjacent to the first section (A1), in which the pipe socket (21) has a distance from the inner wall of the pipe (3) that is constantly increasing in relation to the distance (D1) in the first section, wherein the second section (A2) is arranged between the first section (A1) and a main body of the at least one connection funnel (2").

2. The assembly unit (1, 1'; 1"; 1"') in accordance with claim 1, wherein the pipe socket (21) of the at least one connection funnel (2) extends beyond the connection section (31) of the pipe (3) into the interior of the pipe (3) by at least 0.8 cm or by at least 1 cm or by at least 1.5 cm or by at least 2 cm or by at least 3 cm.

3. The assembly unit (1, 1'; 1"; 1"') in accordance with claim 2, wherein the pipe socket (21) of the at least one connection funnel (2) extends beyond the connection section (31) of the pipe (3) into the interior of the pipe (3) by less than 10 cm or by not more than 3 cm.

4. The assembly unit (1, 1'; 1"; 1"') in accordance with one of claims 1, 2 or 3, wherein the pipe socket (21) of the at least one connection funnel (2) is spaced apart from the inner wall of the pipe (3) by at least 0.8 mm or by at least 1 mm or by at least 1.5 mm or by at least 3 mm or by at least 5 mm or by at least 7 mm.

5. The assembly unit (1, 1'; 1"; 1"') in accordance with claim 4, wherein the pipe socket (21) of the at least one connection funnel (2) is spaced apart from the inner wall of the pipe (3) by less than 3 cm or not more than 7 mm.

6. The assembly unit (1, 1'; 1"; 1"') in accordance with one of claims 1 to 5, wherein
the pipe socket (21) of the at least one connection funnel (2) has a wall thickness (D3) which corresponds at least to two times or at least to five times or at least to ten times the wall thickness (D4) of the pipe (3).

7. The assembly unit (1, 1'; 1"; 1"') in accordance with one of claims 1 to 6, wherein
the pipe socket (21) and the at least one bracket (22) of the at least one connection funnel (2) together have a U-shaped cross section, the U-shaped cross section being formed with a short leg forming the at least one bracket (22) and a long leg forming the pipe socket (21), wherein both legs are directed towards the pipe (3) and a bottom of the U-shape is in fluid connection with an interior of the pipe (3).

8. The assembly unit (1, 1'; 1"; 1"') in accordance with one of claims 1 to 7, wherein
the connection (4) between the connection section (31) of the pipe (3) and the at least one bracket (22) of the connection funnel (2) is established by a weld seam or a soldered seam.

9. The assembly unit (1, 1'; 1"; 1"') in accordance with one of claims 1 to 8, wherein
the at least one bracket (22) of the at least one connection funnel (2) is arranged inside or outside of the pipe (3) and overlaps the pipe (3) in a longitudinal direction of the pipe (3) by at least 1 mm or by at least 2 mm or by at least 3 mm.

10. The assembly unit (1, 1'; 1"; 1"') in accordance with one of claims 1 to 9, wherein
the pipe (3) is spaced apart from the at least one bracket (22) of the at least one connection funnel (2) by less than 1.5 mm or by less than 1.0 mm or by less than 0.5 mm.

11. The assembly unit (1, 1'; 1"; 1"') in accordance with one of claims 1 to 10, wherein
the pipe socket of the at least one connection funnel has a length which corresponds at least to 1.25 times or to at least to 1.5 times or to at least two times or to at least three times the length of the at least one bracket.

12. The assembly unit (1, 1'; 1"; 1"') in accordance with one of claims 1 to 11, wherein
the pipe socket (21) and the at least one bracket (22) of the at least one connection funnel (2) are connected with one another in a gas-tight manner over an entire circumference thereof.

13. The assembly unit (1, 1'; 1"; 1"') in accordance with one of claims 1 to 12, wherein
the at least one connection funnel (2) has exactly one bracket (22) which has a ring-shaped or oval cross section; and/or
the pipe socket (21) of the at least one connection funnel (2) has a ring-shaped or oval cross section.

14. The assembly unit (1, 1'; 1"; 1"') in accordance with one of claims 1 to 13, wherein
the at least one bracket (22) with ring-shaped cross section of the at least one connection funnel (2) is arranged concentrically to the pipe socket (21) with ring-shaped cross section of the at least one connection funnel (2).

15. An exhaust system for a vehicle operated by an internal combustion engine, the exhaust system comprising:
an exhaust elbow (8) designed for connection to an internal combustion engine (7);
a tail pipe (9) in fluid connection with the exhaust elbow (8) via an exhaust pipe;
an assembly unit (1, 1'; 1"; 1"') according to one of claims 1 to 14, wherein the at least one connection funnel (2) and the pipe (3) of the assembly unit (1, 1'; 1"; 1"') are arranged between the exhaust elbow (8) and the tail pipe (9) and are in fluid connection both with the exhaust elbow (8) and with the tail pipe (9).

## Revendications

1. Ensemble (1, 1' ; 1" ; 1"') d'installation de gaz d'échappement, présentant :
au moins une tulipe de raccordement (2) ou deux tulipes de raccordement (2) ; et
un tuyau (3) ;
dans lequel l'au moins une tulipe de raccordement (2) présente un manchon de raccord (21) et au moins une fixation (22) et est formée en un matériau coulé,
dans lequel l'au moins une fixation (22) est disposée à l'extérieur du manchon de raccord (21), et
dans lequel un tronçon de liaison (31) du tuyau (3) est fixé à l'au moins une fixation (22) de l'au moins une tulipe de raccordement (2),
**caractérisé en ce**
**que** le manchon de raccord (21) de l'au moins une tulipe de raccordement (2) s'étend à l'intérieur du tuyau (3),
**que** le manchon de raccord (21) de l'au moins une tulipe de raccordement (2) s'étend à l'intérieur du tuyau (3), au-delà du tronçon de liaison (31) du tuyau (3), jusqu'à l'intérieur du tuyau (3) ;
**que** le manchon de raccord (21) à l'intérieur du tuyau (3) est espacé par rapport à une paroi intérieure du tuyau (3) au moins environ de l'épaisseur simple du tuyau (3) ; et
**que** le manchon de raccord (21) de l'au moins une tulipe de raccordement (2") présente un premier tronçon (A1) dans lequel le manchon de raccord (21) présente un espacement (D1) constant par rapport à la paroi intérieure du tuyau (3), et un deuxième tronçon (A2) jouxtant le premier tronçon (A1) dans lequel le manchon de raccord (21) présente un espacement (D1) par rapport à la paroi interne du tuyau (3) augmentant de manière constante par rapport à l'espacement dans le premier tronçon, dans lequel le deuxième tronçon (A2) est disposé entre le premier tronçon (A1) et un corps principal de la tulipe de raccordement (2").

2. Ensemble (1, 1' ; 1" ; 1"') selon la revendication 1, dans lequel le manchon de raccord (21) de l'au moins une tulipe de raccordement (2) fait saillie à l'intérieur du tuyau (3) en dépassant le tronçon de liaison (31) du tuyau (3) au moins de 0,8 cm, ou au moins de 1 cm, ou au moins de 1,5 cm, ou au moins de 2 cm, ou au moins de 3 cm.

3. Ensemble (1, 1' ; 1" ; 1"') selon la revendication 2, dans lequel le manchon de raccord (21) de l'au moins une tulipe de raccordement (2) fait saillie à l'intérieur du tuyau (3) en dépassant le tronçon de liaison (31) du tuyau (3) de moins de 10 cm ou fait saillie à l'intérieur du tuyau (3) en dépassant le tronçon de liaison (31) du tuyau (3) d'au plus 3 cm.

4. Ensemble (1, 1' ; 1" ; 1"') selon la revendication 1, 2 ou 3, dans lequel le manchon de raccord (21) de l'au moins une tulipe de raccordement (2) est espacé de la paroi intérieure du tuyau (3) au moins de 0,8 mm, ou au moins de 1, ou au moins de 1,5 mm, ou au moins de 3 mm, ou au moins de 5 mm, ou au moins de 7 mm.

5. Ensemble (1, 1' ; 1" ; 1"') selon la revendication 4, dans lequel le manchon de raccord (21) de l'au moins une tulipe de raccordement (2) est espacé de la paroi intérieure du tuyau (3) de moins de 3 cm de la paroi intérieure du tuyau (3) ou d'au plus 7 mm de la paroi intérieure du tuyau (3).

6. Ensemble (1, 1' ; 1" ; 1"') selon l'une des revendications 1 à 5, dans lequel le manchon de raccord (21) de l'au moins une tulipe de raccordement (2) présente une épaisseur de paroi (D3) correspondant au moins au double, ou au moins à 5 fois, ou au moins à 10 fois l'épaisseur de paroi (D4) du tuyau (3).

7. Ensemble (1, 1' ; 1" ; 1"') selon l'une des revendications 1 à 6, dans lequel le manchon de raccord (21) et l'au moins une fixation (22) de l'au moins une tulipe de raccordement (2) présentent ensemble une section transversale en forme de U, avec une branche courte formant l'au moins une fixation (22) et une branche longue formant le manchon de raccord (21), dans lequel les deux branches sont orientées vers le tuyau (3) et le fond de la forme en U étant en communication fluidique avec un intérieur du tuyau (3).

8. Ensemble (1, 1' ; 1" ; 1"') selon l'une des revendications 1 à 7, dans lequel la liaison (4) entre le tronçon de liaison (31) du tuyau (3) et l'au moins une fixation (22) de la tulipe de raccordement (2) s'effectue via un joint de soudure ou un joint brasé.

9. Ensemble (1, 1' ; 1" ; 1"') selon l'une des revendications 1 à 8, dans lequel l'au moins une fixation (22) de l'au moins une tulipe de raccordement (2) est disposé à l'intérieur ou à l'extérieur du tuyau (3), et chevauche le tuyau (3) en direction longitudinale du tuyau (3) au moins de 1 mm, ou au moins de 2 mm, ou au moins de 3 mm.

10. Ensemble (1, 1' ; 1" ; 1"') selon l'une des revendications 1 à 9, dans lequel le tuyau (3) est espacé de l'au moins une fixation (22) de l'au moins une tulipe de raccordement (2) de moins de 1,5 mm, ou de moins de 1,0 mm, ou de moins de 0,5 mm.

11. Ensemble (1, 1' ; 1" ; 1"') selon l'une des revendications 1 à 10, dans lequel le manchon de raccord de l'au moins une tulipe de raccordement présente une longueur correspondant au moins à 1,25 fois, ou au moins à 1,5 fois, ou au moins à 2 fois, ou au moins à 3 fois la longueur de l'au moins une fixation.

12. Ensemble (1, 1' ; 1" ; 1"') selon l'une des revendications 1 à 11, dans lequel le manchon de raccord (21) et l'au moins une fixation (22) de l'au moins une tulipe de raccordement (2) sont reliés ensemble de manière étanche aux gaz sur la totalité de leur circonférence.

13. Ensemble (1, 1' ; 1" ; 1"') selon l'une des revendications 1 à 12,
dans lequel l'au moins une tulipe de raccordement (2) présente exactement une fixation (22) avec une section transversale circulaire ou ovale et/ou dans lequel le manchon de raccord (21) de l'au moins une tulipe de raccordement (2) présente une section transversale circulaire ou ovale.

14. Ensemble (1, 1' ; 1" ; 1"') selon l'une des revendications 1 à 13, dans lequel l'au moins une fixation (22) à section transversale annulaire de l'au moins une tulipe de raccordement (2) est disposé de manière concentrique au manchon de raccord (21) à section transversale annulaire de l'au moins une tulipe de raccordement (2).

15. Installation de gaz d'échappement pour un véhicule à moteur à combustion interne, présentant :
un collecteur d'échappement (8) réalisé pour le raccordement à un moteur à combustion interne (7) ;
une sortie d'échappement (9) en communication fluidique avec le collecteur d'échappement (8) via un tuyau d'échappement ;
un ensemble (1, 1' ; 1" ; 1"') selon l'une des revendications 1 à 14, dans lequel l'au moins une tulipe de raccordement (2) et le tuyau (3) de l'ensemble (1, 1' ; 1" ; 1"') sont disposés entre le collecteur d'échappement (8) et la sortie d'échappement (9), et sont en communication fluidique avec le collecteur d'échappement (8) comme également avec la sortie d'échappement (9).
